# EUROPEAN PATENT SPECIFICATION

(11) **EP 3 529 482 B1**
(45) Date of publication and mention of the grant of the patent: **15.06.2022**
(21) Application number: 17862395.5
(22) Date of filing: 28.09.2017
(51) Int. Cl.: F02D 19/06, F02M 25/12, F02D 43/00, F02D 41/14, C25B 15/02, C25B 1/04

(54) **A MANAGEMENT SYSTEM AND METHOD FOR REGULATING THE ON-DEMAND ELECTROLYTIC PRODUCTION OF HYDROGEN AND OXYGEN GAS FOR INJECTION INTO A COMBUSTION ENGINE**
MANAGEMENTSYSTEM UND VERFAHREN ZUR REGELUNG DER BEDARFSGERECHTEN ELEKTROLYTISCHEN ERZEUGUNG VON WASSERSTOFF UND SAUERSTOFFGAS ZUR EINSPRITZUNG IN EINEN VERBRENNUNGSMOTOR
SYSTÈME ET PROCÉDÉ DE GESTION POUR RÉGULATION DE LA PRODUCTION ÉLECTROLYTIQUE À LA DEMANDE D'HYDROGÈNE ET D'OXYGÈNE GAZEUX POUR INJECTION DANS UN MOTEUR À COMBUSTION

(30) Priority: 20.10.2016 CA 2945891; 20.10.2016 US 201615298783
(43) Date of publication of application: 28.08.2019
(73) Proprietor: Dynacert Inc., Toronto, Ontario M6N 2J1 (CA)
(72) Inventor: BRIDGE, David, Mississauga, Ontario L5V 1W4 (CA); HOFFMAN, Ruston Jeroen, Grimsby, Ontario L3M 0C9 (CA)
(74) Representative: Hewett, Jonathan Michael Richard
(86) International application number: PCT/CA2017/051145
(87) International publication number: WO 2018/072011

(56) References cited:
- WO-A1-2016/064289
- WO-A2-2014/110295
- JP-A- 2007 085 203
- US-A1- 2010 175 941
- US-A1- 2010 175 941
- US-A1- 2015 040 844
- US-A1- 2015 040 844

## Description

### FIELD

The embodiments described herein relate to a system and method for managing an on-demand electrolytic reactor for supplying hydrogen and oxygen gas to an internal combustion engine. In particular, the embodiments relate to a management system and method that can simultaneously reduce emissions and improve the performance of an internal combustion engine by: determining the reactor performance level or calculating the amount of gas being generated by the on-demand electrolytic reactor; monitoring the engine performance level, determining whether the engine performance level would change, i.e. decrease or increase, or remain the same to forecast a future engine demand level; adjusting the reactor performance level to improve the engine performance ahead of the forecast future engine demand level materializing to minimize parasitic loss associated with reactors operating continuously, i.e. reactors that are not capable of adjusting their performance level or the level of produced gas according to the real time engine performance level; and, thereby, improving the engine performance and reducing emissions.

### INTRODUCTION

It has been shown in the art that addition of hydrogen and/or oxygen to the pre-combustion mixture improves the combustion efficiency of internal combustion engines. The improved combustion efficiency may result in lowering emissions and/or improving fuel economy. To achieve this result, an electrolytic reactor is responsible to generate hydrogen and oxygen using water. In order to operate, the reactor requires a power source. In case of an add-on reactor that is installed within a vehicle, the power source is the vehicle's engine. In absence of a proper management and control system, the reactor operates continuously. The uninterrupted supply of hydrogen and oxygen to the engine may not always result in reduced emissions or improved fuel economy. External conditions, such as level of oxygen in the surrounding air, temperature, altitude, humidity, road surface and its grade, etc., can make the operation of the reactor unnecessary.

Accordingly, if the reactor functions ceaselessly without control to supply gas, the engine performance may not be improved. The reactor is drawing power from the engine to keep generating gas. As a result, the power produced by the engine is not consumed entirely for the propulsion and vehicle's internal demands, such as recharging the vehicle's battery or illuminating the road using its lighting system. It is well known that addition of a reactor introduces an external demand or load on the engine. If the reactor works continuously without control, the power drawn from the engine for the reactor's operation may become a parasitic loss to the engine. As a result, emissions may be reduced without improving the fuel efficiency. There are numerous prior arts addressing addition of an electrolytic reactor to improve emissions, as discussed below. However, none of the references discusses a management and control system that can reduce parasitic engine loss associated with these reactors to thereby improve the engine performance and fuel economy and reduce emissions, simultaneously.

De Souza et al. in US6332434 disclose a system and process for generating hydrogen for use in an internal combustion engine. De Souza teaches monitoring specific engine parameters and adjusting the rate of reaction by regulating the amount of provided electrical energy. In De Souza, the operation of the hydrogen generating system may be monitored through sensors and corrected when operating outside normal conditions. However, the normal conditions, the control and the monitoring in De Souza are for safety features and not for improving the performance of the engine. Further, the system in De Souza does not utilize sensors to calculate the amount of the gas being generated. The amount of the gas produced by the reactor correlates with the power consumed by the reactor to generate the gas. As a result, the system in De Souza cannot monitor the engine's energy loss associated with operation of the reactor and cannot minimize the loss. In other words, De Souza may be able to improve fuel efficiency but it will never minimize the impact of the reactor because the system taught by De Souza does not minimize the reactor's power consumption.

Fong et al. in US20110303194 disclose systems and methods for improving combustion and engine performance through controlled oxyhydrogen injection. This prior art discloses reading combustion parameters from the engine control module and modifying hydrogen production by controlling the supplied electrical current. However, Fong et al. do not appear to teach determining the amount of gas generated by the reactor.

Dee et al. in US20110094459 disclose systems and methods for managing the operation of a modified engine with hydrogen and oxygen injection. Dee teaches dynamically generating hydrogen and oxygen based on engine operating characteristics by managing the supplied electrical current. Similar to other prior arts cited above, the system as taught by Dee et al does not determine the amount of gas generated by the reactor so as to adjust the reactor operating condition to reduce parasitic engine's energy loss and improve the engine's efficiency.

Khodabakhsh in US2010175941 discloses a method and system for production of hydrogen. Khodabakhsh teaches a signal generator device for generating an electrical signal for use in an electrolysis device. The signal comprises a waveform with a voltage, a duty cycle, and a frequency. These waveform parameters may be varied based on data received from a plurality of sensors. The signal generator may generate a second electrical signal superimposed with the first electrical signal.

As it is evident from the above discussion of prior arts, there is currently a need for a managing system that can control on-demand generation of hydrogen and oxygen by an electrolytic reactor to reduce emissions and improve fuel economy and engine performance simultaneously. The inventors' solution is to measure the reactor performance level by monitoring a plurality of reactor parameters through a plurality of sensors, thereby calculating the amount of gas being generated, determining the real time engine performance level by monitoring a plurality of engine parameters, determining a change in the engine performance level to forecast, ahead of time, a future engine demand level, and adjusting the reactor performance level to produce gas in an amount that can improve the engine performance prior to the forecast future engine demand level taking place. Monitoring the engine performance in real time can be used to predict the future engine demand level; this, in combination with knowing and controlling the reactor's gas production rate, will provide the means to produce and deliver the gas in real time in an amount that will improve the engine performance while the engine is operating either at the determined engine performance level or at the forecast future engine demand level. In other words, the reactor does not show a reactionary response to what has already happened. The reactor is always one step ahead and ready to supply the engine with the amount of gas required at any instant.

### SUMMARY

The embodiments described herein provide in one aspect a system for managing an on-demand electrolytic reactor for supplying hydrogen and oxygen gas to an internal combustion engine according to claim 1. The system minimizes amount of power drawn from the engine for the reactor to operate and thereby the system minimizes parasitic energy loss generally associated with perpetual reactors. The system comprises an electronic control unit ("ECU") connected to a plurality of sensors coupled to the reactor that are configured to measure a plurality of reactor parameters and a reactor control board ("RCB") coupled to the reactor. The electronic control unit ("ECU") is configured to monitor the plurality of reactor parameters and the plurality of engine parameters; determine a reactor performance level based on at least one of the plurality of reactor parameters; determine an engine performance level based on at least one of the plurality of engine parameters; determine a change in the engine performance level to forecast a future engine demand level; and determine an ideal reactor performance level corresponding to the determined engine performance level, or, if a change in the engine performance level was determined, to the forecast future engine demand level. The reactor control board ("RCB") is configured to regulate the reactor in response to the ideal reactor performance level determined by the electronic control unit ("ECU") by modifying at least one of electrical current supplied to the reactor, electrical voltage supplied to the reactor, and temperature of the reactor.

The embodiments described herein provide in another aspect a similar system in which the ECU is further configured to recalibrate the plurality of engine parameters stored in the engine based on at least one of the plurality of reactor parameters.

In another aspect, the ECU of the same system is further configured to detect an occurrence of at least one of the plurality of reactor parameters existing outside a normal operating range and the ECU is further configured to regulate the reactor in response to the occurrence.

In yet another aspect, the plurality of reactor parameters monitored by the ECU comprises at least one of the following: water tank level, electrolyte level, supplied electrical voltage, supplied electrical current, water tank temperature, reactor temperature, reactor leakage, water pump, gas flow, relative humidity, conductivity of electrolyte, resistance of electrolyte, and concentration of electrolyte.

In the other aspect, the plurality of engine parameters comprises at least one of: odometer, engine speed, fuel consumption, fuel rate, mass air pressure, mass air flow, mileage, distance, fuel rate, exhaust temperature, NOₓ levels, CO₂ levels, O₂ levels, engine instantaneous fuel economy, engine average fuel economy, engine inlet air mass flow rate, engine demand percent torque, engine percent load at current speed, transmission actual gear ratio, transmission current gear, engine cylinder combustion status, engine cylinder knock level, and after treatment intake NOₓ level preliminary FMI, drivetrain, vehicle speed and GPS location.

In one more aspect, the system further comprises a storage module coupled to the electronic control unit, the storage module configured to store the plurality of reactor parameters, the plurality of engine parameters, the reactor performance level, and the engine performance level.

In yet one more aspect, the system further comprises a display module coupled to the electronic control unit, the display module configured to visually display a performance indicator based on at least one of: at least one of the plurality of reactor parameters, at least one of the plurality of engine parameters, the reactor performance level, and the engine performance level.

In another aspect, the system further comprises a communications module coupled to the ECU. The communications module is configured to transmit a first plurality of data to a remote server and receive a second plurality of data from the remote server. The first plurality of data comprises the plurality of reactor parameters, the plurality of engine parameters, the reactor performance level, and the engine performance level. The second plurality of data comprises the ideal reactor performance level and instructions to the reactor control board for achieving the ideal reactor performance level. The second plurality of data is generated based on at least one of historical trends of the transmitted first plurality of data and comparison to other first plurality of data transmitted from other ECUs in communication with the remote server.

In yet another aspect, if the engine is not equipped with an engine control module and the electronic control unit cannot monitor the plurality of engine parameters, the electronic control unit communicates with the remote server to find similar engine conditions to determine the ideal reactor performance level.

In yet another aspect, if the engine is equipped with an engine control module, but the electronic control unit is unable to establish a connection with the engine control module, the electronic control unit can communicate with the remote server to find similar engine conditions to determine the ideal reactor performance level.

In yet another aspect, the system determines the ideal reactor performance level further based on optimizing at least one of engine performance indicators according to their priorities. The engine performance indicators comprise the following: fuel efficiency, emissions, engine torque, and engine horsepower.

The embodiments described herein provide in another aspect a method for managing an on-demand electrolytic reactor for supplying hydrogen and oxygen gas to an internal combustion engine according to claim 14. The method minimizes amount of power drawn from the engine for the reactor to operate. The method minimizes parasitic energy loss generally associated with perpetual reactors. The reactor and engine are in communication with an electronic control unit. The method comprises providing a coupled to the reactor that are configured to measure a plurality of reactor parameters, monitoring the plurality of reactor parameters, monitoring the plurality of engine parameters, determining a reactor performance level based on at least one one of the plurality of reactor parameters, determining an engine performance level based at least on one of the plurality of engine parameters, determining a change in the engine performance level to forecast a future engine demand level, determining an ideal reactor performance level corresponding to the determined engine performance level, or, if a change in the engine performance level was determined, to the forecast future engine demand level, and regulating the reactor in response to the determined ideal performance level by modifying at least one of electrical current supplied to the reactor, electrical voltage supplied to the reactor, and temperature of the reactor.

In yet another aspect, the method further comprises recalibrating the plurality of engine parameters based on at least one of the plurality of reactor parameters.

In another aspect, the method further comprises detecting an occurrence of at least one of the plurality of reactor parameters existing outside a normal operating range and regulating the reactor in response to the occurrence.

In one more aspect, the plurality of reactor parameters comprises at least one of water tank level, electrolyte level, supplied electrical voltage, supplied electrical current, water tank temperature, reactor temperature, reactor leakage, water pump, gas flow, relative humidity, conductivity of electrolyte, resistivity of electrolyte, and concentration of electrolyte.

In another aspect, the plurality of engine parameters comprises at least one of odometer, engine speed, fuel consumption, fuel rate, mass air pressure, mass air flow, mileage, distance, fuel rate, exhaust temperature, NOₓ levels, CO₂ levels, O₂ levels, engine instantaneous fuel economy, engine average fuel economy, engine inlet air mass flow rate, engine demand percent torque, engine percent load at current speed, transmission actual gear ratio, transmission current gear, engine cylinder combustion status, engine cylinder knock level, and after treatment intake NOₓ level preliminary FMI, drivetrain, vehicle speed, and GPS location.

In yet another aspect, the method further comprises storing the plurality of reactor parameters, the plurality of engine parameters, the reactor performance level, and the engine performance level.

In one more aspect, the method further comprises visually displaying at least a performance indicator based on at least one of at least one of the plurality of reactor parameters, at least one of the plurality of engine parameters, the reactor performance level, and the engine performance level.

In another aspect, the method further comprises transmitting a first plurality of data to a remote server and receiving a second plurality of data from the remote server. The first plurality of data comprises the plurality of reactor parameters, the plurality of engine parameters, the reactor performance level, and the engine performance level. The second plurality of data comprises the ideal reactor performance level and instructions to the electronic control unit for achieving the ideal reactor performance level. The second plurality of data is generated based on at least one of historical trends of the transmitted first plurality of data and comparison to other first plurality of data transmitted from other engines to the remote server.

In yet another aspect, the ideal reactor performance level is determined further based on optimizing at least one of engine performance indicators, wherein the engine performance indicators comprise fuel efficiency, emissions, engine torque, and engine horsepower. The method further comprises prioritizing each of the engine performance indicators, determining the ideal reactor performance level required to optimize each of the engine performance indicators ranked from highest to lowest and optimizing the reactor performance to achieve an improved engine performance based on aggregate of the determined idea reactor performance levels.

Further aspects and advantages of the embodiments described herein will appear from the following description taken together with the accompanying drawings.

### BRIEF DESCRIPTION OF THE DRAWINGS

For a better understanding of the embodiments described herein and to show more clearly how they may be carried into effect, reference will now be made, by way of example only, to the accompanying drawings which show at least one exemplary embodiment, and in which:
FIG. 1 is a block diagram of interactions between various components, such as engine, engine control module ("ECM"), electronic control unit ("ECU"), reactor and reactor control board ("RCB") of the system of managing the electrolytic reaction for generating hydrogen gas to be injected to an internal combustion engine;
FIG. 2 is a block diagram of the system which further comprises a storage module coupled to the ECU to store reactor parameters, engine parameters, reactor performance level, and engine performance level;
FIG. 3 is a block diagram of the system which further comprises a display module coupled to the ECU to visually display a performance indicator;
FIG. 4 is a block diagram of the system which further comprises a remote server in communication with the ECU to receive data from the ECU and send data to the ECU;
FIG. 5 is a block diagram of the system which further comprises a storage module, display module, and remote server, all in communication with the ECU;
FIG. 6 is a flowchart of the steps performed by the system in managing the electrolytic reaction for generating hydrogen gas to be injected to an internal combustion engine;
FIG. 7 is a flowchart of the steps performed by the system to detect a fault condition within the reactor and to rectify such condition;
FIG. 8 is a flowchart of the steps performed by the system when it is coupled to a storage module;
FIG. 9 is a flowchart of the steps performed by the system when it is coupled to a display module; and
FIG. 10 is a flowchart of the steps performed by the system when it is in communication with a remote server.

The skilled person in the art will understand that the drawings, described below, are for illustration purposes only. The drawings are not intended to limit the scope of the applicants' teachings in anyway. Also, it will be appreciated that for simplicity and clarity of illustration, elements shown in the figures have not necessarily been drawn to scale. For example, the dimensions of some of the elements may be exaggerated relative to other elements for clarity. Further, where considered appropriate, reference numerals may be repeated among the figures to indicate corresponding or analogous elements.

### DESCRIPTION OF VARIOUS EMBODIMENTS

It will be appreciated that numerous specific details are set forth in order to provide a thorough understanding of the exemplary embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description is not to be considered as limiting the scope of the embodiments described herein in any way, but rather as merely describing the implementation of the various embodiments described herein.

One or more systems described herein may be implemented in computer programs executing on programmable computers, each comprising at least one processor, a data storage system (including volatile and nonvolatile memory and/or storage elements), at least one input device, and at least one output device. For example, and without limitation, the programmable computer may be a programmable logic unit, a mainframe computer, server, and personal computer, cloud based program or system, laptop, personal data assistance, cellular telephone, smartphone, or tablet device.

Each program is preferably implemented in a high level procedural or object oriented programming and/or scripting language to communicate with a computer system. However, the programs can be implemented in assembly or machine language, if desired. In any case, the language may be a compiled or interpreted language. Each such computer program is preferably stored on a storage media or a device readable by a general or special purpose programmable computer for configuring and operating the computer when the storage media or device is read by the computer to perform the procedures described herein.

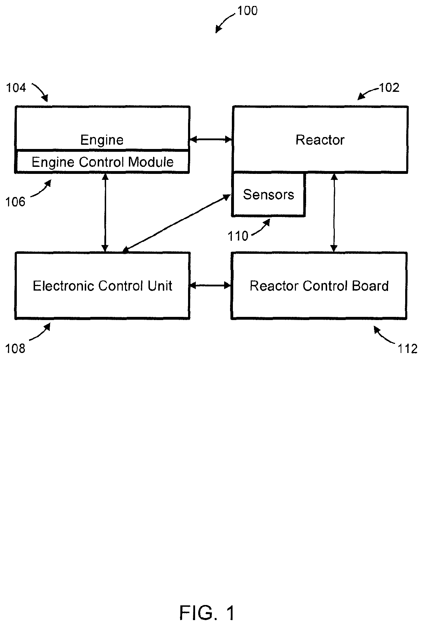

Referring now to FIG.1, FIG. 1 is a block diagram illustrating an exemplary embodiment of system **100** that manages electrolytic reaction of an on-demand reactor **102** for generating hydrogen and oxygen gas to be injected into an internal combustion engine **104** so as to reduce emissions, improve fuel economy and improve engine performance. System **100** comprises a number of functional elements including a reactor **102,** an engine **104,** an engine control module ("ECM") **106,** an electronic control unit ("ECU") **108,** a plurality of sensors **110** coupled to the reactor **102,** and a reactor control board ("RCB") **112.** The ECU **108** is the commander or decision-making unit of the system **100.** The ECU **108** together with the RCB **112** form the control set (not shown) of the system **100.** Upon starting the engine **104,** the ECU **108** powers on and receives power from the engine's ignition signal. This signal is provided when the ignition is turned on.

After the power-on stage, the system **100** performs a self-check. The self-check is a built-in function of the ECU **108's** micro-controller (not shown) that performs initialization of the ECU **108's** input and output pins as well as initialization of the RCB **112** and the plurality of sensors **110.** The system **100** then moves on to perform self-monitoring and operation steps.

In the first step of self-monitoring steps, the ECU **108** performs a leak check on the reactor **102.** A subroutine is used to detect a leak and prevent a false positive. If a leak is detected, the subroutine returns a value indicating so, and generates a fault code.

Next, the ECU **108** performs a temperature check on the reactor **102.** A subroutine is used to monitor the reactor **102's** temperature and control the reactor **102's** heater (not shown) to an optimal temperature for the reactor **102.**

Next, the ECU **108** performs a temperature check on the water reservoir (not shown). A subroutine is used to monitor the water reservoir temperature and control the water reservoir heater to an optimal temperature for the water.

Next, the ECU **108** performs the reactor **102** voltage check. A subroutine is used to check that the voltage is in the optimal range. The RCB **112** has built-in circuitry to measure and control the voltage. The ECU **108** records the value and compares it with the optimal range. If the ECU **108** determines that the voltage is not, and cannot be adjusted to, the optimal range, it returns a fault code.

Next, the ECU **108** performs a level check of the water reservoir. A subroutine is used to measure the water reservoir level (not shown) connected to the reactor **102.** The subroutine has 2 levels. If the ECU **108** receives an "add water" signal for the first level associated with the "operator fill" level, it returns a warning to the operator to top up the tank (not shown). If the ECU **108** receives a signal for the second level associated with the pump (not shown), the ECU **108** will not allow the pump to turn on, preventing damage to the pump and system **100.** The ECU **108** will eventually shut the reactor **102** off to prevent further damage in the event that no water is added to the reservoir.

Next, the ECU performs a resistance check on the reactor **102.** A subroutine is used to measure the resistance of the electrolyte. A sensor among the plurality of sensors **110,** in contact with the electrolyte, is used to measure the resistance. The value can be used to determine the concentration and conductivity of the electrolyte. This information may be useful in the high precision gas flow calculation.

After the self-monitoring steps, described above, the system **100** moves on to perform operation steps. The first step is to power up the reactor **102.**

The ECU **108** will determine if the reactor **102** can be powered up based on the status of the self-monitored checks, above. If the ECU **108** powers on the reactor **102** and no water is added to the reactor **102,** the ECU **108** will shut the reactor **102** down when it reaches a low electrolyte state. When the ECU **108** determines that the reactor **102** is ready, it then turns on the reactor **102.** To do so, the ECU **108** sends a signal to the RCB **112** allowing the current to flow through the reactor **102.**

Then, the ECU **108** performs a reactor **102** amperage check; this is part of the self-monitoring subroutine. The subroutine is used to measure the amperage that the reactor **102** is drawing. The RCB **112** has built in circuitry to measure and control the amperage to the reactor **102.** The measured amperage is an indicator that the reactor **102** is operating. The ECU **108** compares the measured amperage to the optimal amperage and adjusts it accordingly. The RCB **112** can control the voltage and current to adjust the reactor **102's** power consumption to optimal performance. The ECU **108** controls the RCB **112** and the reactor **102's** temperature for achieving optimal performance.

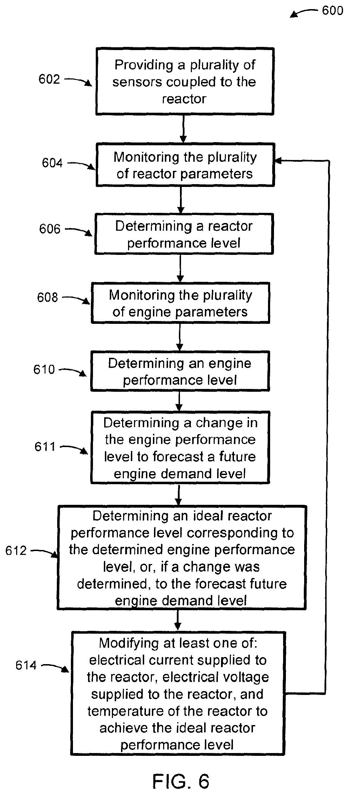

Similar to other steps, subroutines are programmed in the ECU **108's** microcontroller to gather and record plurality of sensors **110** data. The ECU **108** uses the gathered data to measure a plurality of reactor parameters, thereby to calculate the reactor performance level or gas production rate while the reactor **102** is running. To achieve the goal of improving the engine **104's** performance, the ECU **108** calculates the performance of the engine **104** (i.e. determines the engine performance indicators and priority, as described in more detail below) by monitoring a plurality of engine parameters to determine how to adjust the reactor performance level (or gas production rate) so as to improve the engine **104's** performance. The steps associated with this stage of the managing system **100** are illustrated in FIG. 6 and discussed in more detail below.

Referring now to FIGS 1 and 6, FIG. 6 is a flowchart that illustrates basic steps **600** taken by the system **100** to improve the engine **104's** performance. The process begins at step **602.** At step **604,** the ECU **108** monitors the plurality of reactor parameters by means of monitoring the plurality of sensors **110,** as described below. At step **606,** the ECU **108** determines the reactor performance level based on the data gathered from the plurality of sensors **110** in step **604;** this is the initial reactor **102** state. At step **608,** the ECU **108** monitors the plurality of engine parameters either directly from the engine **104,** in the event the engine **104** is not equipped with an ECM **106,** or from the data stored within the ECM **106.** At step **610,** the ECU **108** determines the engine performance level based on the data gathered in step **608;** this is the initial engine **104** state, or its baseline performance. At step **611,** the ECU **108** determines changes that may occur in the determined engine performance level by continuing to monitor the engine performance level so that it can forecast a future engine demand level. Then, at step **612,** the ECU **108** determines a gas production rate or reactor performance level that can improve the engine performance while the engine is operating at the determined engine performance level or, if changes in the performance were detected in step **611,** while the engine is operating at the forecast future engine demand level. The reactor performance level or gas production rate at step **612** is called "ideal reactor performance level" as when the reactor **102** operates at this level it can supply an amount of gas corresponding to the determined engine performance level at step **610,** or, if changes detected at step **611,** corresponding to the forecast future engine demand level, to the engine **104** at exactly the moment the engine **104** is about to operate at the respective performance or demand level. This is algorithm through which the system **100** improves the engine **104's** performance in real time. In other words, the system **100** is always one step ahead of the engine; the system **100** does not show a reactionary response to what already has taken place. Finally, at step **614,** the ECU **108** through the RCB **112** modifies at least one of, but not limited to, the electrical current supplied to the reactor **102,** the electrical voltage supplied to the reactor **102,** and the temperature of the reactor **102** to achieve the ideal reactor performance level.

The steps described above are repeated while the engine **104** is running. In other words, the performance of the reactor **102** is being optimized constantly, by constantly determining new ideal reactor performance levels corresponding to upcoming engine **104's** demand, to continuously improve the engine **104's** performance while the engine **104** is running. In addition to determining the engine performance level at any moment, the ECU **108** continuously monitors the plurality of engine parameters to determine any change in the engine performance level and to forecast a future engine demand level. In other words, the ECU **108** can predict the demand that is going to be placed on the engine in future. The ECU **108** then optimizes the reactor **102's** performance by commanding it to operate at the ideal reactor performance level corresponding to the determined engine performance level, if the engine is still operating at that level, or the forecast future engine demand level, if the engine is about to operate at this level, to improve the engine **104's** performance at real time, i.e. not showing a reactionary response.

The initially measured engine performance level is established as a baseline, as discussed above. The ECU **108** then calculates the reactor performance level or gas production rate, as discussed below, for optimizing the reactor **102's** performance and data logging the reactor performance level corresponding to the baseline engine performance level. Thereafter, the ECU **108** monitors the plurality of engine parameters to detect changes in the engine performance level, i.e. a sign of change in the engine **104's** demand. If the engine **104's** demand and the engine performance level change, the ECU **108** controls the reactor **102** via the RCB **112** to adjust the reactor performance level or gas production rate to improve the engine **104's** performance. The ECU **108** further forecasts if the changes in the engine performance level or the engine **104's** demand are going to continue based on the engine **104's** parameters such as throttle positions, etc. This is the forecasting that takes place at step **611.**

In addition to reading the plurality of engine parameters to determine a change in the engine **104's** demand and the engine performance level, the ECU **108** also uses the telemetry parameters such as GPS data, terrain condition, etc. to better forecast the future engine demand level and the required reactor performance level or gas production rate.

This method allows the ECU **108,** in advance, to estimate the required reactor performance level in preparation for forecast changes in the engine **104's** demand, i.e. the forecast future engine demand level. In other words, knowing the reactor performance level, the amount of gas being generated, the engine performance level, and the forecast changes provide the necessary information to the ECU **108** to estimate and control the reactor performance level, or gas production rate, as a means for controlling the actual amount of gas being delivered to the engine **104.** Using this information, in combination with determining the engine performance level and forecasting the future engine demand level, results in the ability to adjust the reactor performance level or amount of gas production in a way that optimizes the reactor **102's** performance ahead of the engine **104's** demand. That is, the gas enters the combustion chamber as the change in the engine performance level occurs, i.e. when the engine **104** operates at the forecast future engine demand level, and not afterwards in response to changes.

This also means that the reactor **102** settings are automatically adjusted so that only the necessary power is used to create the required gas. For instance, if only 1 liter of gas is required, the ECU **108** controls the reactor **102** via the RCB **112** to use the minimum power required to produce that amount of gas. As described below, this operation method of system **100** results in improving the engine **104's** performance, based on the priority of the performance indicators, while minimizing the reactor **102's** power consumption and optimizing the performance of the reactor **102** while simultaneously improving the fuel efficiency and reducing emissions.

The following paragraphs discuss the aforementioned steps in more detail.

Referring again to FIGS 1 and 6, to calculate the reactor performance level or gas production rate at step **606,** the ECU **108** reads values on amperage, voltage, electrolyte conductivity and concentration, and temperature value, i.e. the plurality of reactor and engine parameters, from the plurality of sensors **110** at step **604.** Each ECU **108** has an in-house calibration chart programmed into its microcontroller that maps the hydrogen and oxygen production and parameter values. The data gathered from the plurality of sensors **110** at step **604** is used to fine tune the calculation performed at step **606** by comparing the measured values against the baseline values or previous performance levels. This also has the added benefit that the system **100** does not need to be equipped with expensive gas flow meters to determine the gas being delivered to the engine.

To further determine a more accurate reactor performance level or gas production rate, the ECU **108,** in addition to using the electrical power consumed by the reactor **102 (*****Power=Voltage** x **Electrical Current),*** can factor in for the variance in temperature and variance in concentration of electrolyte. Initially, the reactor performance level is determined at a calibration temperature. The reactor **102** will inherently heat up on its own and without controlling the power there is a possibility that the reactor **102** will overheat. When the power is limited, the reactor **102's** temperature should stabilize. For calibration, the power is limited and the reactor **102** is allowed to stabilize. The gas production and temperature that are measured initially define the reactor **102's** baseline for performance, as referred to above. This means the ECU **108** needs to take into account an adjustment for temperature in further calculations of the reactor performance level.

Consequently, the ECU **108** adjusts the reactor performance level or gas production rate, calculated at step **606,** by means of taking into account amperage, voltage, temperature, and/or electrolyte concentration. Thereafter, the ECU **108** returns this adjusted value as the reactor performance level or gas production rate.

The calculations at step **606** may be based on one of, but not limited to, the plurality of sensors **110** monitoring the plurality of reactor parameters, depending on the process or calculation.

Before moving on to the next step of determining the engine performance level, step **610,** the importance of monitoring the electrolyte concentration and conductivity should be highlighted. As discussed above, the concentration is monitored at step **604** as part of determining the reactor performance level or gas production rate at step **606;** the concentration changes during operation and will have a small effect on the gas production. In addition, the monitoring of electrolyte concentration is used to check that the electrolyte is not lost or not crystalized and to confirm that water has been added to the reactor **102** when required. The concentration will vary as the water is converted to gas. If the concentration is out of a predetermined range and the ECU **108** cannot correct the issue by demanding the pump to add water, the ECU **108** indicates a fault and prevents the system **100** from further operation. The electrolyte is a catalyst and should not get used up. Crystallization and electrolyte loss will lead to a unit failure.

As discussed, the ECU **108** also uses monitoring of the electrolyte concentration to determine the reactor performance level (or the amount of gas being generated) at step **606.** Gas production calculations based on the power consumption (derived from those plurality of sensors **110** measuring voltage and amperage, through the following formula ***Power=Voltage x Electrical Current)*** are more accurate when adjusted by introducing the concentration and conductivity of the electrolyte into the equation. As the water is decomposed into gas, the concentration level will change. This change affects the gas production to a certain degree.

Moving to the next step of determining the engine performance level, step **610,** the ECU **108** interacts with the engine **104,** or the ECM **106,** using built-in circuitry to monitor the plurality of engine parameters at step **608,** discussed below. The plurality of engine parameters is monitored in order to observe the engine **104's** operation and performance changes. This allows the ECU **108** to determine the ideal reactor performance level required for improving the engine performance. Changes, determined in step **611,** in each of the monitored plurality of engine parameters at step **608** indicate whether the engine **104** needs to supply more power or less power, i.e. whether the engine **104's** demand or the engine performance level is increasing or decreasing. Determining changes can be used to forecast a future engine demand level. It is also upon determining a change in the engine **104's** demand or the engine performance level that the ECU **108,** at step **614,** controls the RCB **112** to adjust the reactor performance level or gas production rate to improve the engine **104**'s performance when the engine **104** is in fact operating at the forecast future engine demand level.

The ECU **108** monitors either through the ECM **106,** if available, or directly, at least one of, but not limited to, the following non-exhaustive list of plurality of engine parameters at step **608** to determine the engine performance at step **610** and to determine a changes in the engine performance level to forecast a future engine demand level at step **611:** odometer, vehicle speed, engine speed, fuel consumption, fuel rate, mass air pressure, mass air flow, mileage, distance, fuel rate, exhaust temperature, NOx sensors, CO2 sensors, O2 sensors, engine instantaneous fuel economy, engine average fuel economy, engine inlet air mass flow rate, engine demand-percent torque, engine percent load at current speed, transmission actual gear ratio, transmission current gear, engine cylinder combustion status (all cylinders), engine cylinder knock level (all cylinders), after treatment intake NOx sensor preliminary FMI (all banks), etc.

As discussed, the ECU **108** controls the amount of gas delivered to the engine **104** intake by determining the engine performance level in order to improve the combustion process. The ECU **108** is also able to recalibrate some of the plurality of engine parameters, not changing the programming, so that the ECM **106** can adapt to addition of the gasses to the combustion chamber. Moreover, as discussed below, it should be noted that the ECU **108** records the reactor performance level and engine performance level for future analysis and improvement of the system **100.**

Now that the ECU **108** has determined the engine performance level at step **610,** and the forecast future engine demand level at step **611,** it needs to control the RCB **112** to adjust the reactor performance level, or gas production rate, to improve the engine **104's** performance while the engine **104** is operating at the determined engine performance level or, due to changes determined at step **611,** operating at the forecast future engine demand level. The ECU **108** uses the gathered data from steps **604-611** to determine an ideal reactor performance level at step **612** and send the determined ideal reactor performance level to the RCB **112** at step **614.** In addition to the data gathered from the engine **104** and the reactor **102,** the ECU **108** also uses telemetry parameters such as GPS data, terrain condition, etc. in determining and forecasting the current and future engine **104's** demands, corresponding engine performance levels, and the corresponding ideal reactor performance level.

The reactor **102** now needs to operate according to the determined ideal reactor performance level at step **612.** The RCB **112** is designed to controls the reactor in order to control and adjust the amount of gas being delivered to the engine. The RCB **112** has a custom built microcontroller controlling, but not limited to, a pulse width modulator (PWM) and a current sensor. It may also have a voltage and/or a frequency modulator along with corresponding sensors. At step **614,** the RCB **112** can measure and control the reactor **102's** performance through integrated circuitry based on instructions received from the ECU **108.** The RCB **112** also has a humidity-temperature sensor and a communication link, discussed below.

At step **604,** the RCB **112** monitors the amperage as part of the self-monitoring subroutine. The RCB **112** measures the power that the reactor **102** is drawing and adjusts the amperage using the PWM to meet the power requirements instructed by the ECU **108.** The RCB **112** raises or lowers the amperage to control the reactor performance level or gas production rate, as determined by the ECU **108,** provided the power is within the limits. The RCB **112** also monitors the reactor **102** temperature, as part of the self-monitoring subroutine, through an integrated temperature sensor. The RCB **112** and the ECU **108** interacts to control the heater and fan to adjust the reactor temperature.

An increased temperature aids in the electrolytic process of water to a certain degree. As the temperature rises, the decomposition potential, the energy required for splitting water into gas, is lowered. The RCB **112** uses this information to raise the temperature if higher reactor performance level or more gas production rate is needed without increasing the amperage. By increasing the temperature rather than the amperage, the power draw from the engine **104** can be reduced and thereby the engine **104**'s performance or efficiency is increased, as discussed below. Further, monitoring the temperature prevents the reactor **102** from overheating.

In summary, the ECU **108,** in steps **602-614,** interacts with the engine **104,** or ECM **106,** the plurality of sensors **110** and RCB **112** to determine the reactor performance level and engine performance level. The ECU **108** controls the RBC **112** to control the pulse width modulation circuit (not shown) to control the amount of current available to the reactor **102** and thereby to adjust the reactor performance level or gas production rate to improve the engine **104's** performance while the engine **104** is operating at the determined engine performance level or forecast future engine demand level. This adjusted reactor performance level is referred to as the ideal reactor performance level.

It should be noted that, as discussed, the ECU **108** is the commander or major decision-making unit of the system **100.** In other words, the RCB **112** is a slave to the ECU **108.** However, the RCB **112** is equipped with a communication link as well. Through the communication link, the RCB **112** can gather other auxiliary information to provide further control in the event the ECU **108** is not part of the system **100.**

Finally, when the reactor **102** is not required to operate anymore, the ECU **108** performs a shut down cycle. Before turning the unit off, the ECU **108** determines the reactor **102** electrolyte level and reservoir water level. If the water level is low, the ECU **108** indicates to the operator to fill the water reservoir. The ECU **108** will fill the reactor provided there is sufficient water in the reservoir. The cycle has a timer to allow the reactor to settle; the electrolyte level will change slightly after operation. The ECU **108** has a shut down cycle that uses an internal battery to power some functions to prepare the system **100** for immediate operation next time it is turned on. The shut down cycle is initiated when there is no longer an ignition signal powering the ECU **108.**

As discussed, the reactor performance level or gas production rate is directly related to the power that the reactor **102** draws from the engine **104** to generate gas. Knowing the reactor performance level, the ideal reactor performance level, and the engine performance level, or the forecast future engine demand level, will allow the system **100** to minimize the parasitic power loss from the engine **104.** The reactor **102** uses a portion of the power produced by the engine **104** to run. When the amount of gas generated by the reactor **102** is more than the demand to meet the real time engine performance level, the reactor **102** is using more power from the engine **104** than is necessary. This adds to the parasitic energy loss. Since the system **100** can adjust the reactor performance level according to the real time engine performance level, this parasitic loss can be minimized. By controlling and optimizing the reactor **102's** performance, when the engine performance level does not demand a higher gas production rate from the reactor **102,** the system **100** places less load on the engine **104.** In other words, the system **100** achieves one of the objectives of this invention, namely to reduce emissions and improve fuel efficiency simultaneously while minimizing the power consumption of the reactor **102.**

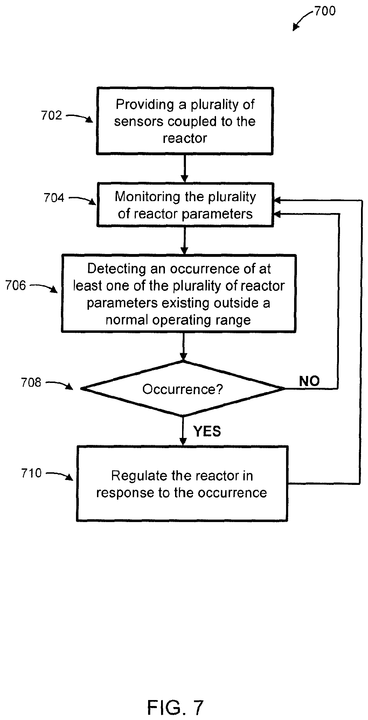

Referring now to FIGS 1 and 7, FIG. 7 is a flowchart that illustrates basic steps **700** taken by the system **100** to detect faults within the system **100.** The process begins at step **702.** At step **704,** the ECU **108** gathers data on the plurality of reactor parameters by means of monitoring the plurality of sensors **110.** At step **706,** the ECU **108** checks for an occurrence of at least one of, but not limited to, the plurality of reactor parameters existing outside a normal operating range based on the data gathered from the plurality of sensors **110** in step **704.** At step **708,** if the ECU **108** determines that at least one of the plurality of reactor parameters is outside a normal operating range, it moves to step **710.** Otherwise, it moves back to step **704** to monitor the plurality of reactor parameters again. At step **710,** the ECU **108** orders the RCB **112** to regulate the reactor **102** in response to the occurrence detected at step **708.**

The ECU **108** has the intelligence to use the information it gathers at step **704** to determine whether the unit is inside the normal operating conditions or not. The ECU **108** has the ability to change operational parameters to correct fault conditions, when needed, at step **710.** The ECU **108** has the logic to determine if the changes to correct the fault(s) are having an effect or not. The ECU **108** fault detection is designed to protect the engine **104** from being damaged as well as the system **100** itself. The fault detection is designed in a fail-safe manner. The ECU **108** programming also has built-in corrective actions to be taken to keep the system **100** operational for as long as possible, without causing damage, if a fault occurs. At step **710,** the ECU **108** shuts the reactor **102** off if the corrective actions are not having the desired effect to prevent damage to the engine **104** or reactor **102.**

The plurality of reactor parameters that are monitored by the ECU **108** at step **704** comprises of the following non-exhaustive list: water tank level, electrolyte level, supplied electrical voltage, supplied electrical current, water tank temperature, reactor temperature, reactor leakage, water pump, gas flow, relative humidity, conductivity of electrolyte, resistance of electrolyte, concentration of electrolyte, etc.

At step **704,** the ECU **108** monitors the water tank level and provides indication when water needs to be added to the reservoir of the system **100.** This also serves to protect the water pump from running when there is not enough water in the tank. The ECU **108** eventually shuts the reactor **102** off at step **710** to prevent further damage in the event that no water is added to the reservoir.

At step **704,** the ECU **108** monitors the reactor **102** electrolyte level and will add water to the reactor **102** when needed. The ECU **108** eventually shuts the system **100** off at step **710** in the event that no water is added to the reactor **102.**

At step **704,** the ECU **108** monitors the electrolyte concentration. The concentration is also monitored as part of determining the reactor performance level or the amount of gas being generated, as discussed above. This monitoring, at step **704,** is also used to check that the electrolyte is not crystallizing and to confirm that water has been added to the reactor **102** when required. The concentration will vary as the water is added to the reactor **102** or converted to gas. If the concentration is out of a predetermined range and the ECU **108** cannot correct the issue, the ECU **108** indicates a fault at step **710.**

At step **704,** the ECU **108** measures the voltage to determine, at step **706,** how much voltage is available before the reactor **102** is powered up. It also determines the power the reactor **102** is drawing and ensures the reactor **102** does not drain the vehicle battery in the event that the engine **104's** alternator fails or if the ignition is left on without the engine **104** running. If the voltage is outside the working range, the ECU **108** shuts the reactor **102** off and indicates a fault at step **710.**

At step **704,** the ECU **108** measures the current to determine, at step 706, the power the reactor 102 is drawing and to ensure that the reactor 102 is operating at the specified amperage for the desired reactor performance level or gas production rate. As discussed above, this is one of the ways that the ECU **108** controls the reactor performance level or the gas production rate. If the amperage is outside the working range, the ECU 108 shuts the reactor **102** off and indicates a fault at step **710.**

At step **704,** the ECU **108** measures the water tank temperature to ensure that the water is liquid and not solid. If, at step 706, the temperature is determined to be below 8°C, the ECU 108 turns on the tank heater to bring the water to operational temperature at step **710.**

At step **704,** the ECU **108** measures the reactor **102** temperature to monitor its performance and ensure the reactor **102** does not over-heat. At step 706, the ECU 108 determines if the temperature is optimal. The ECU **108** turns on the reactor 102 heater to bring it up to optimal temperature at step 710. It also shuts the reactor 102 down in the event that the reactor **102** starts to overheat.

At step **704,** the ECU 108 monitors the reactor 102 for leaks. The ECU **108** at step 706 determines if the leak is a false positive or an actual leak. If the leak is determined to be true the ECU 108 shuts down the reactor **102** and indicates a fault at step **710.**

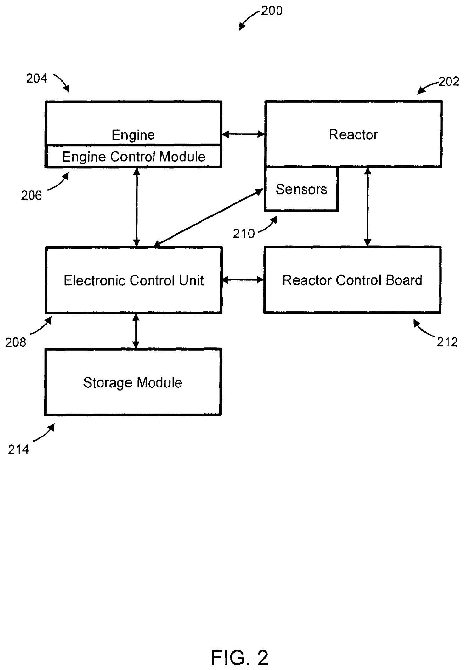

Referring now to FIG.2, FIG. 2 is a block diagram illustrating another exemplary embodiment of the system **100.** System **200** comprises a number of functional elements including a reactor **202,** an engine **204,** an engine control module ("ECM") **206,** an electronic control unit ("ECU") **208,** a plurality of sensors **210** coupled to the reactor **202,** a reactor control board ("RCB") **212,** and a storage module **214** coupled to the ECU **208.** Other than the storage module **214,** other components are similar to those described above and illustrated in FIG. 1. As a result, these components are referred to using reference numerals corresponding to FIG. 1.

The storage module **214** is configured to store the plurality of reactor parameters, the plurality of engine parameters, the reactor performance level and the engine performance level. The ECU **108** uses the storage module **214** to log and record data for further analysis to create performance improvements. The ECU **108** also logs the data for future reporting.

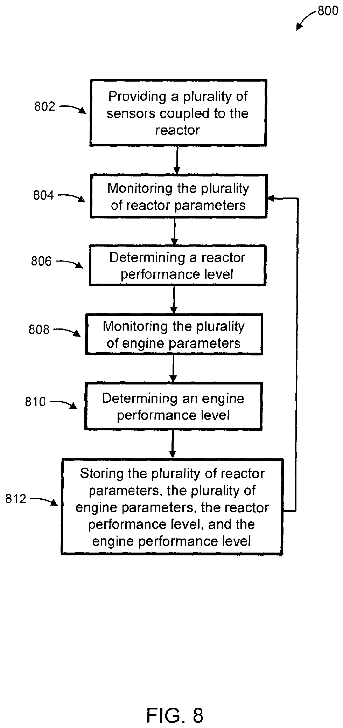

Referring now to FIGS 1, 2 and 8, FIG. 8 is a flowchart that illustrates basic steps **800** taken by the system **100** or **200** to store the plurality of reactor parameters, the plurality of engine parameters, the reactor performance level, and the engine performance level. The process begins at step **802.** At step **804,** the ECU **108** gathers data on the plurality of reactor parameters by means of monitoring the plurality of sensors **110** or **210.** At step **806,** the ECU **108** determines the reactor performance level based on the data gathered from the plurality of sensors **110** in step **804.** At step **808,** the ECU **108** gathers data on the plurality of engine parameters. At step **810,** the ECU **108** determines the engine performance level based on the data gathered in step **808.** Finally, at step **812,** the ECU **108** stores the monitored plurality of reactor parameters and plurality of engine parameters along with the determined reactor performance level and engine performance level in the storage module **214.**

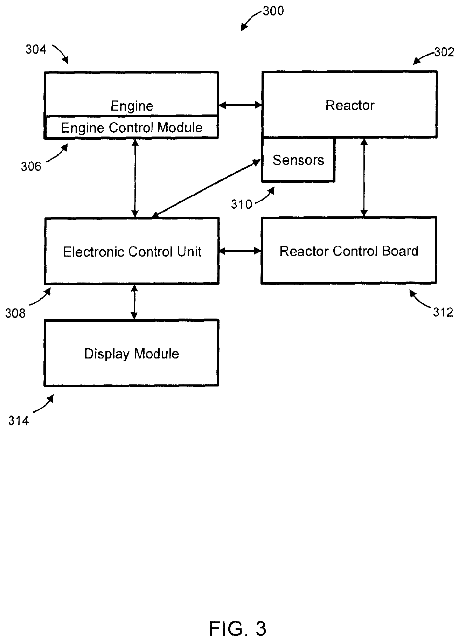

Referring now to FIG. 3, FIG. 3 is a block diagram illustrating another exemplary embodiment of system **100.** System **300** comprises a number of functional elements including a reactor **302,** an engine **304,** an engine control module ("ECM") **306,** an electronic control unit ("ECU") **308,** a plurality of sensors **310** coupled to the reactor **302,** a reactor control board ("RCB") **312,** and a display module **314** coupled to the ECU **308.** Other than the display module **314,** other components are similar to those described above and illustrated in FIG. 1. As a result, these components are referred to using reference numerals corresponding to FIG. 1.

Referring to FIGS 1 and 3, the display module is configured to visually display a performance indicator based on the plurality of reactor parameters, the plurality of engine parameters, the reactor performance level and the engine performance level. The display module 314 is the main focal point for the operator to interface with system 100. The information and communication are controlled by the ECU 108. The display module 314 updates the driver on the performance of the reactor 102 and the engine 104. It also allows the operator to control and setup specific parameters for the reactor 102. Different customers may have different applications for system 100 and the display module 314 provides the interaction for customizing the available parameters to meet their needs. Further, the ECU 108 can communicate with the display module 314 to display the necessary information to a user to keep the system 100 in optimal work order or to inform the user to perform service on the system 100.

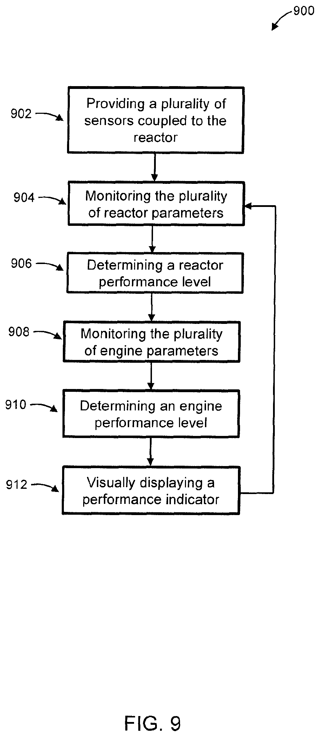

Referring now to FIGS. 1, 3 and 9, FIG. 9 is a flowchart that illustrates basic steps 900 taken by the system **100** or **300** to visually display the plurality of reactor parameters, the plurality of engine parameters, the reactor performance level, and the engine performance level. The process begins at step 902. At step 904, the ECU 108 gathers data on the plurality of reactor parameters by means of monitoring the plurality of sensors **110** or **310.** At step **906,** the ECU **108** determines the reactor performance level based on the data gathered from the plurality of sensors 110 in step 904. At step 908, the ECU 108 gathers data on the plurality of engine parameters. At step 910, the ECU 108 determines the engine performance level based on the data gathered in step 908. Finally, at step 912, the ECU 108 can visually display one or many of the monitored plurality of reactor parameters and the plurality of engine parameters along with determined reactor performance level and engine performance level via the display module 314.

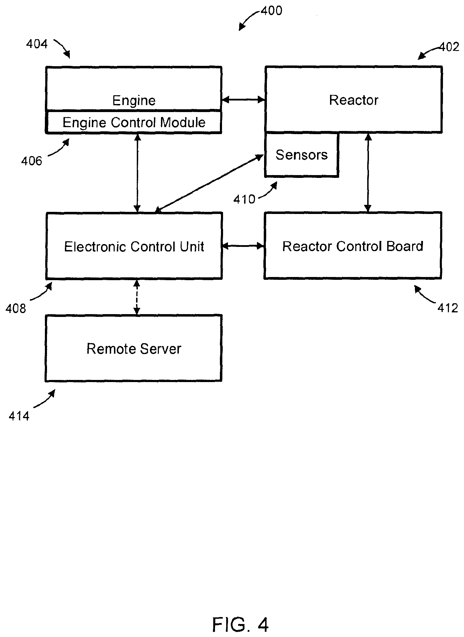

Referring now to FIG.4, FIG. 4 is a block diagram illustrating another exemplary embodiment of system 100. System 400 comprises a number of functional elements including a reactor 402, an engine 404, an engine control module ("ECM") **406,** an electronic control unit ("ECU") **408,** a plurality of sensors **410** coupled to the reactor **402,** a reactor control board ("RCB") **412,** and a remote server **414** in communication with the ECU **408.** Other than the remote server **414,** other components are similar to those described above and illustrated in FIG. 1. As a result, these components are referred to using reference numerals corresponding to FIG. 1.

Referring to FIGS 1 and 4, the ECU **108** is able to transmit performance logs and other specified data to a portal to be compiled and put into a report. The data that is logged and used by the ECU **108** during the initial trip to improve the performance of the engine **104** and optimize the performance of the reactor **102** is uploaded to the remote server **414** at the end of the trip. The received data is analyzed to determine if any improvements can be made to the logic of the system **100** to improve the engine **104**'s performance. A human operator or a computer program is responsible for conducting said analysis. The improvements may be applied to other ECUs, associated with other engines, in communication with the remote server **414** that have similar conditions. The existence of the remote server **414** is crucial in report generating.

Moreover, the ECU **108** is not limited to transmitting data only at the end of each trip. The ECU **108** can set a data transmission interval during each trip and send data to the remote server **414** accordingly. The received data is stored in the remote server **414** and a trend of historical data is created for every ECU **108** in communication with the remote server **414.** Upon receiving the data, an analysis is conducted. The data is compared to historical trends and data received from other ECUs that are in communication with the remote server **414.** If the human operator or the computer program determines that an improvement to the performance of the engine **104** and the reactor **102** is available, based on the aforementioned analysis, the remote server **414** sends instructions to the ECU **108** in order to improve the engine **104** and the reactor **102** performance. If the remote server **414** determines that the performance improvement is also applicable to other ECUs associated with other engines in communication with the remote server **414,** it sends similar instructions to those ECUs as well.

In order to transmit and receive data to and from the remote server **414,** the ECU **108** needs to establish a connection with the remote server **414.** The ECU **108** is able to connect through multiple methods to transfer the correct data and information. The ECU **108** has built-in radios, such as GPRS, WIFI, and/or Bluetooth, for communication with external devices for the interaction and transfer of data. The ECU **108** has USB ports too for wired communications. Further, after each instance of data transmission, the ECU **108** receives and sends a confirmation that data has been transmitted successfully.

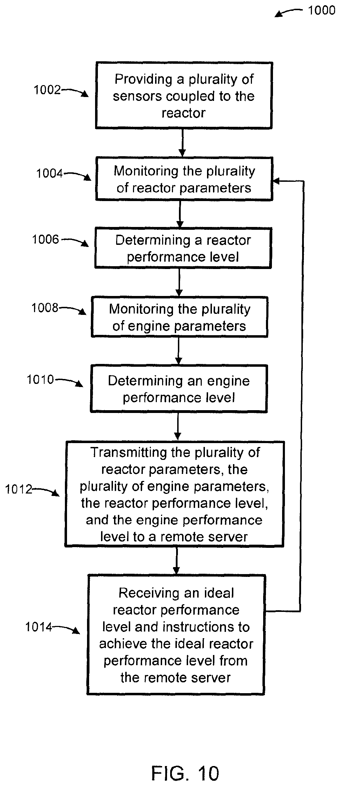

Referring now to FIGS 1, 4 and 10, FIG. 10 is a flowchart that illustrates basic steps **1000** taken by managing system **100** or **400** to communicate with the remote server **414** and transmit the plurality of reactor parameters, the plurality of engine parameters, the reactor performance level, and the engine performance level. The process begins at step **1002.** At step **1004,** the ECU **108** gathers data on the plurality of reactor parameters by means of monitoring the plurality of sensors **110** or **410.** At step **1006,** the ECU **108** determines the reactor performance level based on the data gathered from the plurality of sensors **110** in step **1004.** At step **1008,** the ECU **108** monitors the plurality of engine parameters. At step **1010,** the ECU **108** determines the engine performance level based on the data gathered in step **1008.** At step **1012,** the ECU **108** transmits the monitored plurality of reactor parameters and plurality of engine parameters along with determined reactor performance level and engine performance level to the remote server **414.** Finally, at step **1014,** the remote server **414,** after conducting the above discussed analysis on the received data, transmits an ideal reactor performance level and instructions on how to achieve the ideal reactor performance level to the ECU **108.** This in turn results in improved reactor **102**'s and engine **104**'s performance.

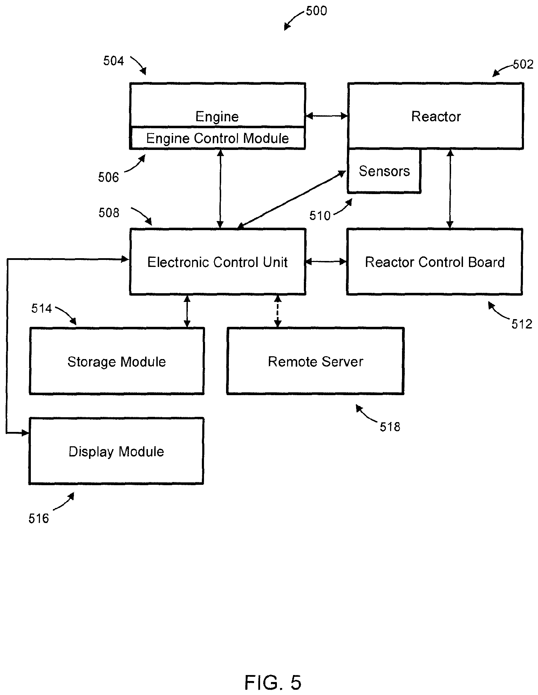

Referring now to FIG.5, FIG. 5 is a block diagram illustrating another exemplary embodiment of system **100.** System **500** comprises a number of functional elements including a reactor **502,** an engine **504,** an engine control module ("ECM") **506,** an electronic control unit ("ECU") **508,** a plurality of sensors **510** coupled to the reactor **502,** a reactor control board
("RCB") **512,** a storage module **514** coupled to the ECU **508,** a display module **516** coupled to the ECU **508,** and a remote server **518** in communication with the ECU **508.** This embodiment is a combination of embodiments represented in FIGS 1-4.

In another exemplary embodiment of system **100,** the ECU **108** can adjust the reactor performance level or gas production rate in a way to selectively optimize engine performance indicators. Engine performance indicators are calculated using the plurality of engine parameters, discussed above. Engine performance indicators are targets that the system **100** wants to achieve. For instance, engine performance indicators are, but not limited to, fuel efficiency, emissions, engine torque, and engine horsepower. Depending on which engine performance indicators are selected, the system **100** maximizes the selected engine performance indicators according to the priority assigned to the selected engine performance indicators.

Referring now to FIGS 1 and 3, the user selects the engine performance indicators that he/she desires to optimize and ranks them based on a priority that she/he has in mind through the display module **314.** The ECU **108** adjust the reactor performance level or gas production rate to optimize each of the selected engine performance indicators ranked from highest to lowest. Consider the following example.

For instance, there are situations where emissions will out rank fuel economy. Consider a case that the engine performance indicators are ordered as: 1) emissions reduction and 2) fuel savings. In this example, the ECU **108** monitors the emissions and adjusts the reactor performance level or gas production rate to reduce emissions first. It continues to adjust the reactor performance level or gas production rate to reduce emissions up to the point of reaching a plateau or just before emissions begin to rise again. This is the optimum point. At this point, the ECU **108** focuses on reducing the fuel consumption, the engine performance indicator ranked second in priority. As the fuel consumption is being reduced, emissions are still being monitored to track any changes there. Once the fuel economy is optimized, a comparison between the two different reactor performance levels or gas production rates corresponding to optimizing emissions and fuel economy, respectively, is made to find a best fit model that can optimize efficiency in all aspect of the engine performance. This found best fit model is the ideal reactor performance level associated with simultaneously optimizing selected engine performance indicators. This method for improving the engine **104**'s and reactor **102**'s performance can be used with one or multiple engine performance indicators.

Numerous specific details are set forth herein in order to provide a thorough understanding of the exemplary embodiments described herein. However, it will be understood by those of ordinary skill in the art that these embodiments may be practiced without these specific details. In other instances, well-known methods, procedures and components have not been described in detail so as not to obscure the description of the embodiments.

## Claims

1. A system (100) for managing an on-demand electrolytic reactor (102) for supplying hydrogen and oxygen gas to an internal combustion engine (104), the internal combustion engine being located in a vehicle, the system comprising:
a plurality of sensors (110) coupled to the reactor, the plurality of sensors configured to measure a plurality of reactor parameters;
an electronic control unit (108) coupled to the plurality of sensors and the engine, the electronic control unit configured to:
monitor the plurality of reactor parameters and a plurality of engine parameters;
determine a reactor performance level based on a parameter value associated with at least one of the plurality of reactor parameters, wherein determining the reactor performance level comprises determining an amount of hydrogen gas being generated by the reactor, the amount of hydrogen gas being determined by processing one or more parameter values associated with one or more reactor parameters;
determine an engine performance level based on a parameter value associated at least one of the plurality of engine parameters;
predict a change in the engine performance level at a predetermined future time to forecast a future engine demand level, wherein the prediction is based on one or more parameter values associated with one or more engine parameters and terrain condition data corresponding the vehicle comprising the internal combustion engine; and
determine an ideal reactor performance level based on the future engine demand level and the amount of hydrogen gas being produced; and
a reactor control unit (112) coupled to the reactor and the electronic control unit, the reactor control unit configured to:
subsequently regulate the reactor in response to the ideal reactor performance level determined by the electronic control by modifying at least one of electrical current supplied to the reactor, electrical voltage supplied to the reactor, and temperature of the reactor.

2. The system of claim 1, wherein the electronic control unit (108) is further configured to recalibrate the one or more of the engine parameters based on one of the plurality of reactor parameters.

3. The system of claim 1 or 2, wherein the electronic control unit (108) is further configured to detect an occurrence of at least one of the plurality of reactor parameters existing outside a normal operating range; and the electronic control unit is further configured to regulate the reactor (102) in response to the occurrence.

4. The system of any one of claims 1 to 3, wherein the plurality of reactor parameters comprises at least one of: water tank level, electrolyte level, supplied electrical voltage, supplied electrical current, water tank temperature, reactor temperature, reactor leakage, water pump, gas flow, relative humidity, conductivity of electrolyte, resistance of electrolyte, and concentration of electrolyte.

5. The system of any one of claims 1 to 4, wherein the plurality of engine parameters comprises at least one of: odometer, engine speed, fuel consumption, fuel rate, mass air pressure, mass air flow, mileage, distance, fuel rate, exhaust temperature, NOx levels, CO₂ levels, O₂ levels, engine instantaneous fuel economy, engine average fuel economy, engine inlet air mass flow rate, engine demand percent torque, engine percent load at current speed, transmission actual gear ratio, transmission current gear, engine cylinder combustion status, engine cylinder knock level, and after treatment intake NOx level preliminary FMI, drivetrain, vehicle speed, and GPS location.

6. The system of any one of claims 1 to 5, further comprising a memory (214) coupled to the electronic control unit (208), the memory (214) storing parameter values associated with the plurality of reactor parameters and the plurality of engine parameters, the memory (214) further storing the reactor performance level and the engine performance level.

7. The system of any one of claims 1 to 6, further comprising a display module (314) coupled to the electronic control unit (308), the display module configured to visually display at least a performance indicator, the performance indicator being based on at least one of: at least one of the plurality of reactor parameters, at least one of the plurality of engine parameters, the reactor performance level, and the engine performance level.

8. The system of any one of claims 1 to 7, further comprising a communications module coupled to the electronic control unit (408), the communications module configured to transmit a first plurality of data to a remote server (414) and receive a second plurality of data from the remote server, the first plurality of data comprising parameter values associated with the plurality of reactor parameters and the plurality of engine parameters, the reactor performance level, and the engine performance level, and the second plurality of data comprising the ideal reactor performance level and instructions to the electronic control unit for achieving the ideal reactor performance level, the second plurality of data generated based on at least one of historical trends of the transmitted first plurality of data and comparison to other first plurality of data transmitted from other electronic control units in communication with the remote server.

9. The system of any one of claims 1 to 8, wherein the ideal reactor performance level is determined based on priorities assigned to one of engine performance indicators, wherein the engine performance indicators can be selected from a group consisting of fuel efficiency, emissions, engine torque, and engine horsepower.

10. The system of any one of claims 1 to 9, wherein the prediction is additionally based on location data associated with the vehicle comprising the internal combustion engine.

11. The system of any one of claims 1 to 10, wherein:
the plurality of reactor parameters comprises at least a supplied electrical voltage and a supplied electrical current to the reactor; and
determining an amount of hydrogen gas being generated by the reactor (102) comprises processing at least the power consumed by the reactor based on the supplied electrical voltage and the supplied electrical current to the reactor.

12. The system of claim 4, wherein determining the amount of hydrogen gas being generated by the reactor (102) further comprises adjusting the determined amount of hydrogen gas being generated by the reactor based on the amount of conductivity of the electrolyte and the amount of concentration of the electrolyte.

13. The system of claim 6, wherein: the memory unit (214) further stores a calibration chart and determining the amount of hydrogen gas being generated by the reactor (202) comprises:
mapping, using the calibration chart, the one or more parameter values associated with the one or more reactor parameters to a level of hydrogen gas production by the reactor;
preferably, comparing a reactor temperature to an initial calibration temperature to determine a variance in reactor temperature; and
preferably, based on the variance in reactor temperature, mapping using the calibration chart, the parameter values to an adjusted value of hydrogen gas production.

14. A method for managing an on-demand electrolytic reactor (102) for supplying hydrogen and oxygen gas to an internal combustion engine, the internal combustion engine (104) being located in a vehicle, the method comprising:
providing a plurality of sensors (110) coupled to the, the plurality of sensors configured to measure a plurality of reactor parameters;
monitoring the plurality of reactor parameters;
determining a reactor performance level based on a parameter value associated with at least one of the plurality of reactor parameters, wherein determining the reactor performance level comprises determining an amount of hydrogen gas being generated by the reactor, the amount of hydrogen gas being determined by processing one or more parameter values associated with one or more reactor parameters;
monitoring a plurality of engine parameters;
determining an engine performance level based on a parameter value associated with at least one of the plurality of engine parameters;
predicting a change in the engine performance level at a predetermined future time to forecast a future engine demand level, wherein the prediction is based on one or more parameter values associated with the one or more engine parameters and terrain condition data corresponding to the vehicle comprising the internal combustion engine; and
determining an ideal reactor performance level based on the forecast future engine demand level and the amount of hydrogen gas being produced; and
subsequently regulating the reactor in response to the determined ideal performance level by an electronic control unit (108), connected to the plurality of sensors, by modifying at least one of: electrical current supplied to the reactor, electrical voltage supplied to the reactor, the frequency, the amplitude, and temperature of the reactor.

## Patentansprüche

1. System (100) zum Managen eines bedarfsgerechten elektrolytischen Reaktors (102) zum Zuführen von Wasserstoff und Sauerstoffgas an einen Verbrennungsmotor (104), wobei sich der Verbrennungsmotor in einem Fahrzeug befindet, wobei das System Folgendes umfasst:
eine Vielzahl von Sensoren (110), die an den Reaktor gekoppelt sind, wobei die Vielzahl von Sensoren dazu konfiguriert sind, eine Vielzahl von Reaktorparametern zu messen;
eine elektronische Steuereinheit (108), die an die Vielzahl von Sensoren und den Motor gekoppelt ist, wobei die elektronische Steuereinheit zu Folgendem konfiguriert ist:
Überwachen der Vielzahl von Reaktorparametern und einer Vielzahl von Motorparametern;
Bestimmen eines Reaktorleistungspegels auf Grundlage eines Parameterwerts, der mit mindestens einem der Vielzahl von Reaktorparametern zusammenhängt, wobei das Bestimmen des Reaktorleistungspegels Bestimmen einer Menge von Wasserstoffgas umfasst, das durch den Reaktor erzeugt wird, wobei die Menge von Wasserstoffgas durch Verarbeiten von einem oder mehreren Parameterwerten bestimmt wird, die mit einem oder mehreren Reaktorparametern zusammenhängen;
Bestimmen eines Motorleistungspegels auf Grundlage eines Parameterwerts, der mit mindestens einem der Vielzahl von Motorparametern zusammenhängt;
Vorhersagen einer Änderung des Motorleistungspegels zu einem vorbestimmten zukünftigen Zeitpunkt, um einen zukünftigen Motorbedarfspegel vorherzusagen, wobei die Vorhersage auf einem oder mehreren Parameterwerten beruht, die mit einem oder mehreren Motorparametern und Geländebedingungsdaten zusammenhängen, die dem Fahrzeug entsprechen, das den Verbrennungsmotor umfasst; und
Bestimmen eines idealen Reaktorleistungspegels auf Grundlage des zukünftigen Motorbedarfspegels und der Menge von Wasserstoffgas, das erzeugt wird; und
eine Reaktorsteuereinheit (112), die an den Reaktor und die elektronische Steuereinheit gekoppelt ist, wobei die Reaktorsteuereinheit konfiguriert ist, um:
daraufhin den Reaktor als Reaktion auf den durch die elektronische Steuerung bestimmten idealen Reaktorleistungspegel durch Modifizieren von mindestens einem des elektrischen Stroms, der dem Reaktor zugeführt wird, der elektrischen Spannung, die dem Reaktor zugeführt wird und der Temperatur des Reaktors zu regeln.

2. System nach Anspruch 1, wobei die elektronische Steuereinheit (108) ferner dazu konfiguriert ist, den einen oder die mehreren der Motorparameter auf Grundlage von einem der Vielzahl von Reaktorparametern neu zu kalibrieren.

3. System nach Anspruch 1 oder 2, wobei die elektronische Steuereinheit (108) ferner dazu konfiguriert ist, ein Auftreten von mindestens einem der Vielzahl von Reaktorparametern, der außerhalb eines normalen Betriebsbereiches vorhanden ist, zu detektieren; und wobei die elektronische Steuereinheit ferner dazu konfiguriert ist, den Reaktor (102) als Reaktion auf das Auftreten zu regeln.

4. System nach einem der Ansprüche 1 bis 3, wobei die Vielzahl von Reaktorparametern mindestens eines der Folgenden umfasst: Wassertankpegel, Elektrolytpegel, zugeführte elektrische Spannung, zugeführter elektrischer Strom, Wassertanktemperatur, Reaktortemperatur, Reaktorleckage, Wasserpumpe, Gasfluss, relative Luftfeuchtigkeit, Leitfähigkeit des Elektrolyten, Widerstand des Elektrolyten und Konzentration des Elektrolyten.

5. System nach einem der Ansprüche 1 bis 4, wobei die Vielzahl von Motorparametern mindestens eines der Folgenden umfasst:
Kilometerzähler, Motordrehzahl, Kraftstoffverbrauch, Kraftstoffrate, Luftmassendruck, Luftmassenfluss, Meilenstand, Entfernung, Kraftstoffrate, Abgastemperatur, NOx-Pegel, CO₂-Pegel, O₂-Pegel, momentaner Kraftstoffeinsparung des Motors, durchschnittlicher Kraftstoffeinsparung des Motors, Motoreinlass-Luftmassenflussrate,
Motorbedarfsprozentdrehmoment, Motorprozentlast bei gegenwärtiger Drehzahl, tatsächliches Getriebeübersetzungsverhältnis, gegenwärtiger Getriebegang, Motorzylinderverbrennungsstatus, Motorzylinderklopfpegel und vorläufiger FMI des Nachbehandlungseinlass-NOx-Pegels, Antriebsstrang, Fahrzeuggeschwindigkeit und GPS-Ort.

6. System nach einem der Ansprüche 1 bis 5, das ferner einen Speicher (214) umfasst, der an die elektronische Steuereinheit (208) gekoppelt ist, wobei der Speicher (214) Parameterwerte speichert, die mit der Vielzahl von Reaktorparametern und der Vielzahl von Motorparametern zusammenhängen, wobei der Speicher (214) ferner den Reaktorleistungspegel und den Motorleistungspegel speichert.

7. System nach einem der Ansprüche 1 bis 6, das ferner ein Anzeigemodul (314) umfasst, das an die elektronische Steuereinheit (308) gekoppelt ist, wobei das Anzeigemodul dazu konfiguriert ist, mindestens einen Leistungsindikator anzuzeigen, wobei der Leistungsindikator auf mindestens einem der Folgenden beruht: mindestens einem der Vielzahl von Reaktorparametern, mindestens einem der Vielzahl von Motorparametern, dem Reaktorleistungspegel und dem Motorleistungspegel.

8. System nach einem der Ansprüche 1 bis 7, das ferner ein Kommunikationsmodul umfasst, das an die elektronische Steuereinheit (408) gekoppelt ist, wobei das Kommunikationsmodul dazu konfiguriert ist, eine erste Vielzahl von Daten an einen entfernten Server (414) zu übertragen und eine zweite Vielzahl von Daten von dem entfernten Server zu empfangen, wobei die erste Vielzahl von Daten Parameterwerte umfasst, die mit der Vielzahl von Reaktorparametern und der Vielzahl von Motorparametern, dem Reaktorleistungspegel und dem Motorleistungspegel zusammenhängen und wobei die zweite Vielzahl von Daten den idealen Reaktorleistungspegel und Anweisungen an die elektronische Steuereinheit zum Erreichen des idealen Reaktorleistungspegels umfassen, wobei die zweite Vielzahl von Daten auf Grundlage von mindestens einem von historischen Trends der übertragenen ersten Vielzahl von Daten und einem Vergleich mit der anderen ersten Vielzahl von Daten erzeugt werden, die von anderen elektronischen Steuereinheiten in Kommunikation mit dem entfernten Server übertragen werden.

9. System nach einem der Ansprüche 1 bis 8, wobei der ideale Reaktorleistungspegel auf Grundlage von Prioritäten bestimmt ist, die einem der Motorleistungsindikatoren zugewiesen sind, wobei die Motorleistungsindikatoren aus einer Gruppe ausgewählt sein können, die aus Kraftstoffeffizienz, Emissionen, Motordrehmoment und Motorpferdestärken bestehen.

10. System nach einem der Ansprüche 1 bis 9, wobei die Vorhersage zusätzlich auf Ortsdaten beruht, die mit dem Fahrzeug zusammenhängen, das den Verbrennungsmotor umfasst.

11. System nach einem der Ansprüche 1 bis 10, wobei:
die Vielzahl von Reaktorparametern mindestens eine zugeführte elektrische Spannung und einen zugeführten elektrischen Strom an den Reaktor umfasst; und
Bestimmen einer Menge von Wasserstoffgas, das durch den Reaktor (102) erzeugt wird, Verarbeiten von mindestens der Leistung, die durch den Reaktor verbraucht wird, auf Grundlage der zugeführten elektrischen Spannung und des zugeführten elektrischen Stroms an den Reaktor umfasst.

12. System nach Anspruch 4, wobei das Bestimmen der Menge von Wasserstoffgas, das durch den Reaktor (102) erzeugt wird, ferner Einstellen der bestimmten Menge von Wasserstoffgas, das durch den Reaktor erzeugt wird, auf Grundlage des Ausmaßes der Leitfähigkeit des Elektrolyten und des Ausmaßes der Konzentration des Elektrolyten umfasst.

13. System nach Anspruch 6, wobei: die Speichereinheit (214) ferner eine Kalibrierungstabelle speichert und ferner das Bestimmen der Menge von Wasserstoffgas, das durch den Reaktor (202) erzeugt wird, Folgendes umfasst:
Zuordnen, unter Verwendung der Kalibrierungstabelle, des einen oder der mehreren Parameterwerte, die mit dem einen oder den mehreren Reaktorparametern zusammenhängen, zu einem Pegel von Wasserstoffgasproduktion durch den Reaktor;
vorzugsweise Vergleichen einer Reaktortemperatur mit einer anfänglichen Kalibrierungstemperatur, um eine Varianz der Reaktortemperatur zu bestimmen; und
vorzugsweise, auf Grundlage der Varianz der Reaktortemperatur, Zuordnen der Parameterwerte zu einem eingestellten Wert von Wasserstoffgasproduktion unter Verwendung der Kalibrierungstabelle.

14. Verfahren zum Managen eines bedarfsgerechten elektrolytischen Reaktors (102) zum Zuführen von Wasserstoff und Sauerstoffgas zu einem Verbrennungsmotor, wobei sich der Verbrennungsmotor (104) in einem Fahrzeug befindet, wobei das Verfahren Folgendes umfasst:
Bereitstellen einer Vielzahl von Sensoren (110), die an den gekoppelt sind, wobei die Vielzahl von Sensoren dazu konfiguriert sind, eine Vielzahl von Reaktorparametern zu messen;
Überwachen der Vielzahl von Reaktorparametern;
Bestimmen eines Reaktorleistungspegels auf Grundlage eines Parameterwerts, der mit mindestens einem der Vielzahl von Reaktorparametern zusammenhängt, wobei das Bestimmen des Reaktorleistungspegels Bestimmen einer Menge von Wasserstoffgas umfasst, das durch den Reaktor erzeugt wird, wobei die Menge von Wasserstoffgas durch Verarbeiten eines oder mehrerer Parameterwerte bestimmt wird, die mit dem einen oder den mehreren Reaktorparametern zusammenhängen;
Überwachen einer Vielzahl von Motorparametern;
Bestimmen eines Motorleistungspegels auf Grundlage eines Parameterwerts, der mit mindestens einem der Vielzahl von Motorparametern zusammenhängt;
Vorhersagen einer Änderung des Motorleistungspegels zu einem vorbestimmten zukünftigen Zeitpunkt, um einen zukünftigen Motorbedarfspegel vorherzusagen, wobei die Vorhersage auf einem oder mehreren Parameterwerten beruht, die mit dem einen oder den mehreren Motorparametern und Geländebedingungsdaten zusammenhängen, die dem Fahrzeug entsprechen, das den Verbrennungsmotor umfasst; und
Bestimmen eines idealen Reaktorleistungspegels auf Grundlage des vorhergesagten zukünftigen Motorbedarfspegels und der Menge von Wasserstoffgas, das erzeugt wird; und
daraufhin Regeln des Reaktors als Reaktion auf den bestimmten idealen Leistungspegel durch eine elektronische Steuereinheit (108), die mit der Vielzahl von Sensoren verbunden ist, durch Modifizieren von mindestens einem der Folgenden: elektrische Leistung, die dem Reaktor zugeführt wird, elektrische Spannung, die dem Reaktor zugeführt wird, der Frequenz, der Amplitude und der Temperatur des Reaktors.

## Revendications

1. Système (100) de gestion d'un réacteur électrolytique à la demande (102) pour fournir de l'hydrogène et de l'oxygène gazeux à un moteur à combustion interne (104), le moteur à combustion interne étant situé dans un véhicule, le système comprenant :
une pluralité de capteurs (110) couplés au réacteur, la pluralité de capteurs étant configurés pour mesurer une pluralité de paramètres de réacteur ;
une unité de commande électronique (108) couplée à la pluralité de capteurs et au moteur, l'unité de commande électronique étant configurée pour :
surveiller la pluralité de paramètres de réacteur et une pluralité de paramètres de moteur ;
déterminer un niveau de performance de réacteur sur la base d'une valeur de paramètre associée à au moins l'un de la pluralité de paramètres de réacteur, dans lequel la détermination du niveau de performance de réacteur comprend la détermination d'une quantité d'hydrogène gazeux générée par le réacteur, la quantité d'hydrogène gazeux étant déterminée par le traitement d'une ou de plusieurs valeurs de paramètres associées à un ou plusieurs paramètres de réacteur ;
déterminer un niveau de performance de moteur sur la base d'une valeur de paramètre associée à au moins l'un de la pluralité de paramètres de moteur ;
prédire un changement du niveau de performance de moteur à un moment futur prédéterminé pour prévoir un niveau de demande de moteur futur, dans lequel la prédiction est basée sur une ou plusieurs valeurs de paramètres associées à un ou plusieurs paramètres de moteur et données d'état de terrain correspondant au véhicule comprenant le moteur à combustion interne ; et
déterminer un niveau de performance de réacteur idéal sur la base du niveau de demande de moteur futur et de la quantité d'hydrogène gazeux produite ; et
une unité de commande de réacteur (112) couplée au réacteur et à l'unité de commande électronique, l'unité de commande de réacteur étant configurée pour :
réguler ensuite le réacteur en réponse au niveau de performance de réacteur idéal déterminé par la commande électronique en modifiant au moins un du courant électrique fourni au réacteur, de la tension électrique fournie au réacteur et de la température du réacteur.

2. Système selon la revendication 1, dans lequel l'unité de commande électronique (108) est en outre configurée pour réétalonner les un ou plusieurs des paramètres de moteur sur la base de l'un de la pluralité de paramètres de réacteur.

3. Système selon la revendication 1 ou 2, dans lequel l'unité de commande électronique (108) est en outre configurée pour détecter une occurrence d'au moins un de la pluralité de paramètres de réacteur existant en dehors d'une plage de fonctionnement normale ; l'unité de commande électronique est en outre configurée pour réguler le réacteur (102) en réponse à l'occurrence.

4. Système selon l'une quelconque des revendications 1 à 3, dans lequel la pluralité de paramètres de réacteur comprend au moins l'un des éléments suivants : niveau de réservoir d'eau, niveau d'électrolyte, tension électrique fournie, courant électrique fourni, température de réservoir d'eau, température de réacteur, fuite de réacteur, pompe à eau, débit de gaz, humidité relative, conductivité de l'électrolyte, résistance de l'électrolyte et concentration de l'électrolyte.

5. Système selon l'une quelconque des revendications 1 à 4, dans lequel la pluralité de paramètres de moteur comprend au moins l'un des éléments suivants : compteur kilométrique, régime moteur, consommation de carburant, débit de carburant, pression d'air massique, débit d'air massique, kilométrage, distance, débit de carburant, température d'échappement, niveaux de NOx, niveaux de CO₂, niveaux d'O₂, consommation instantanée de carburant du moteur, consommation moyenne de carburant du moteur, débit massique de l'air d'admission du moteur, pourcentage de couple demandé par le moteur, pourcentage de charge du moteur au régime actuel, rapport de vitesse réel de la transmission, rapport actuel de la transmission, état de combustion des cylindres du moteur, niveau de cliquetis des cylindres du moteur, et après traitement, FMI préliminaire de niveau de NOx à l'admission, transmission, vitesse du véhicule et emplacement GPS.

6. Système selon l'une quelconque des revendications 1 à 5, comprenant en outre une mémoire (214) couplée à l'unité de commande électronique (208), la mémoire (214) stockant des valeurs de paramètres associées à la pluralité de paramètres de réacteur et la pluralité de paramètres de moteur, la mémoire (214) stockant en outre le niveau de performance de réacteur et le niveau de performance de moteur.

7. Système selon l'une quelconque des revendications 1 à 6, comprenant en outre un module d'affichage (314) couplé à l'unité de commande électronique (308), le module d'affichage étant configuré pour afficher visuellement au moins un indicateur de performance, l'indicateur de performance étant basé sur au moins l'un des éléments suivants : au moins un de la pluralité de paramètres de réacteur, au moins un de la pluralité de paramètres de moteur, le niveau de performance de réacteur et le niveau de performance de moteur.

8. Système selon l'une quelconque des revendications 1 à 7, comprenant en outre un module de communication couplé à l'unité de commande électronique (408), le module de communication étant configuré pour transmettre une première pluralité de données à un serveur distant (414) et recevoir une seconde pluralité de données du serveur distant, la première pluralité de données comprenant des valeurs de paramètres associées à la pluralité de paramètres de réacteur et à la pluralité de paramètres de moteur, au niveau de performance de réacteur et au niveau de performance de moteur, et la seconde pluralité de données comprenant le niveau de performance de réacteur idéal et des instructions à l'unité de commande électronique pour atteindre le niveau de performance de réacteur idéal, la seconde pluralité de données étant générées sur la base d'au moins l'une des tendances historiques de la première pluralité de données transmises et de la comparaison avec une autre première pluralité de données transmises par d'autres unités de commande électroniques en communication avec le serveur distant.

9. Système selon l'une quelconque des revendications 1 à 8, dans lequel le niveau de performance de réacteur idéal est déterminé sur la base des priorités attribuées à l'un des indicateurs de performance de moteur, dans lequel les indicateurs de performance de moteur peuvent être sélectionnés à partir d'un groupe composé du rendement énergétique, des émissions, du couple moteur et de la puissance de moteur.

10. Système selon l'une quelconque des revendications 1 à 9, dans lequel la prédiction est en outre basée sur les données d'emplacement associées au véhicule comprenant le moteur à combustion interne.

11. Système selon l'une quelconque des revendications 1 à 10, dans lequel :
la pluralité de paramètres de réacteur comprend au moins une tension électrique fournie et un courant électrique fourni au réacteur ; et
la détermination d'une quantité d'hydrogène gazeux générée par le réacteur (102) comprend le traitement au moins de la puissance consommée par le réacteur sur la base de la tension électrique fournie et du courant électrique fourni au réacteur.

12. Système selon la revendication 4, dans lequel la détermination de la quantité d'hydrogène gazeux générée par le réacteur (102) comprend en outre l'ajustement de la quantité déterminée d'hydrogène gazeux générée par le réacteur sur la base de la quantité de conductivité de l'électrolyte et de la quantité de concentration de l'électrolyte.

13. Système selon la revendication 6, dans lequel : l'unité de mémoire (214) stocke en outre un tableau d'étalonnage et la détermination de la quantité d'hydrogène gazeux générée par le réacteur (202) comprend :
le mappage, à l'aide du tableau d'étalonnage, d'une ou de plusieurs valeurs de paramètres associées à un ou plusieurs paramètres de réacteur à un niveau de production d'hydrogène gazeux par le réacteur ;
de préférence, la comparaison d'une température de réacteur à une température d'étalonnage initiale afin de déterminer une variance de la température de réacteur ; et
de préférence, sur la base de la variance de la température de réacteur, le mappage à l'aide du tableau d'étalonnage des valeurs de paramètres à une valeur ajustée de la production d'hydrogène gazeux.

14. Procédé de gestion d'un réacteur électrolytique à la demande (102) pour fournir de l'hydrogène et de l'oxygène gazeux à un moteur à combustion interne, le moteur à combustion interne (104) étant situé dans un véhicule, le procédé comprenant :
la fourniture d'une pluralité de capteurs (110) couplés à, la pluralité de capteurs étant configurés pour mesurer une pluralité de paramètres de réacteur ;
la surveillance de la pluralité de paramètres de réacteur ;
la détermination d'un niveau de performance de réacteur sur la base d'une valeur de paramètre associée à au moins l'un de la pluralité de paramètres de réacteur, dans lequel la détermination du niveau de performance de réacteur comprend la détermination de la quantité d'hydrogène gazeux générée par le réacteur, la quantité d'hydrogène gazeux étant déterminée par le traitement d'une ou de plusieurs valeurs de paramètres associées à un ou plusieurs paramètres de réacteur ;
la surveillance d'une pluralité de paramètres de moteur ;
la détermination d'un niveau de performance de moteur sur la base d'une valeur de paramètre associée à au moins l'un de la pluralité de paramètres de moteur ;
la prédiction d'un changement du niveau de performance de moteur à un moment prédéterminé pour prévoir un niveau de demande de moteur futur, dans lequel la prédiction est basée sur une ou plusieurs valeurs de paramètres associées à un ou plusieurs paramètres de moteur et données d'état de terrain correspondant au véhicule comprenant le moteur à combustion interne ; et
la détermination d'un niveau de performance de réacteur idéal sur la base du niveau de demande de moteur futur prévu et de la quantité d'hydrogène gazeux produite ; et
la régulation ultérieure du réacteur en réponse au niveau de performance idéal déterminé par une unité de commande électronique (108), connectée à la pluralité de capteurs, en modifiant au moins l'un des éléments suivants : le courant électrique fourni au réacteur, la tension électrique fournie au réacteur, la fréquence, l'amplitude et la température du réacteur.
